# FASCICULE DE BREVET EUROPEEN

(11) **EP 1 517 819 B1**
(45) Date de publication et mention de la délivrance du brevet: **11.10.2006**
(21) Numéro de dépôt: 03761484.9
(22) Date de dépôt: 23.06.2003
(51) Int. Cl.: B60S 1/34

(54) **DISPOSITIF D'ESSUIE-GLACE COMPORTANT UN AGENCEMENT DE LIMITATION DU DECOLLEMENT**
WINDSCHUTZSCHEIBEN-WISCHERVORRICHTUNG MIT TRENNUNGSBEGRENZUNGSVORRICHTUNG
WINDSCREEN WIPER DEVICE COMPRISING A SEPARATION-LIMITING DEVICE

(30) Priorité: 28.06.2002 FR 0208216
(43) Date de publication de la demande: 30.03.2005
(73) Titulaire: VALEO SYSTEMES D'ESSUYAGE, 78321 La Verrière (FR)
(72) Inventeur: BOUSSET, Xavier, F-63000 Clermont-Ferrand (FR)
(86) Numéro de dépôt international: PCT/EP2003/006599
(87) Numéro de publication internationale: WO 2004/002790

(56) Documents cités:
- EP-A- 0 755 833
- DE-A- 3 149 034
- FR-A- 2 771 061

## Description

La présente invention se rapporte à un dispositif d'essuie-glace comportant un agencement de limitation du décollement.

Elle concerne plus précisément un dispositif d'essuie-glace automobile, en particulier destiné à la vitre arrière d'un véhicule automobile.

Le bras et son balai associé des dispositifs d'essuie-glace peuvent être soulevés par des filets d'air, lors de fortes vitesses, ou par des brosses, lors du lavage du véhicule automobile dans des machines automatiques. Il peut en résulter un décrochage du bras et sa perte, ce qui est particulièrement préjudiciable à la sécurité de conduite du véhicule automobile. Il s'avère donc nécessaire d'équiper les dispositifs d'essuie-glace d'un agencement de limitation du décollement.

Un tel dispositif d'essuie-glace est décrit dans le document de brevet GB-A-2 205 033.

Le dispositif d'essuie-glace décrit dans ce document comporte un bras articulé en pivotement autour d'un premier axe sur un entraîneur actionné en rotation sur une plage angulaire par l'intermédiaire d'un arbre sensiblement perpendiculaire au premier axe.

Il comporte des moyens de limitation du pivotement dans le sens opposé à la surface à essuyer, constitués d'un épaulement formé sur le bras et d'un épaulement formé sur l'entraîneur venant en butée lorsque le bras est pivoté d'un angle déterminé.

Les épaulements sont conformés sur le bras et sur l'entraîneur. Il en résulte que ce type d'agencement de limitation est intégré à la conception du dispositif d'essuie_glace.

L'invention propose une agencement de limitation du décollement qui soit adaptable à des dispositifs d'essuie-glace existants et qui présente une grande facilité de montage.

Pour ce faire, elle se rapporte à un dispositif d'essuie_glace comportant un bras articulé en pivotement autour d'un premier axe sur un entraîneur actionné en rotation sur une plage angulaire par l'intermédiaire d'un arbre d'axe sensiblement perpendiculaire au premier axe, comportant des moyens de limitation dudit pivotement dans le sens opposé à une surface à essuyer, constitués d'une partie de bras et d'une partie d'entraîneur venant en butée lorsque le bras est pivoté d'un angle déterminé, caractérisé en ce que la partie d'entraîneur est une rondelle montée sur l'arbre, solidarisée avec l'entraîneur et pourvue d'un moyen de butée de la dite partie de bras.

Selon un mode de réalisation préféré, le moyen de butée est constitué d'au moins une branche saillante sur la périphérie de la rondelle et la partie de bras est constituée d'une lame solidaire du bras.

Avantageusement, la branche saillante est constituée d'un profilé en U dont l'ouverture est dirigée vers la surface et reçoit la lame lorsque le bras est pivoté d'un angle déterminé.

De préférence, la rondelle est intercalée entre l'entraîneur et un écrou de fixation de ce dernier sur l'arbre.

De préférence, le premier axe est disposé dans l'entraîneur du côté opposé au bras par rapport au dit arbre.

L'entraîneur peut comporter des moyens de détrompage pour un positionnement correct de la rondelle.

Et de préférence, la rondelle est métallique.

L'invention est décrite ci-après plus en détail à l'aide de figures ne représentant qu'un mode de réalisation préféré de l'invention.
La figure 1 une vue partielle en perspective d'un dispositif d'essuie-glace conforme à l'invention en position normale.
La figure 2 une vue partielle en perspective d'un dispositif d'essuie-glace conforme à l'invention en position décollée.
La figure 3 est une vue en perspective d'une rondelle conforme à l'invention.
La figure 4 est une vue en coupe transversale d'un dispositif d'essuie glace conforme à l'invention en position normale.
La figure 5 est une vue en coupe transversale d'un dispositif d'essuie glace conforme à l'invention en position décollée.

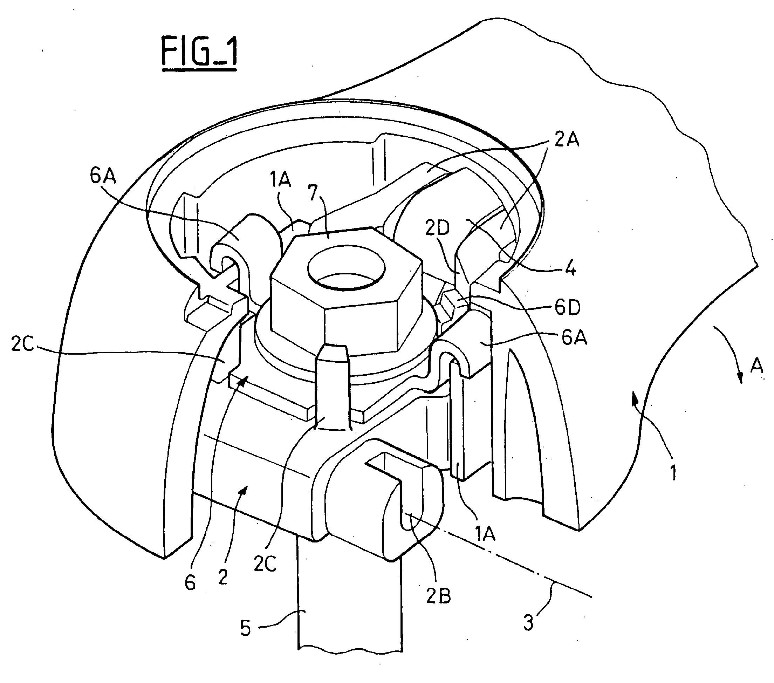

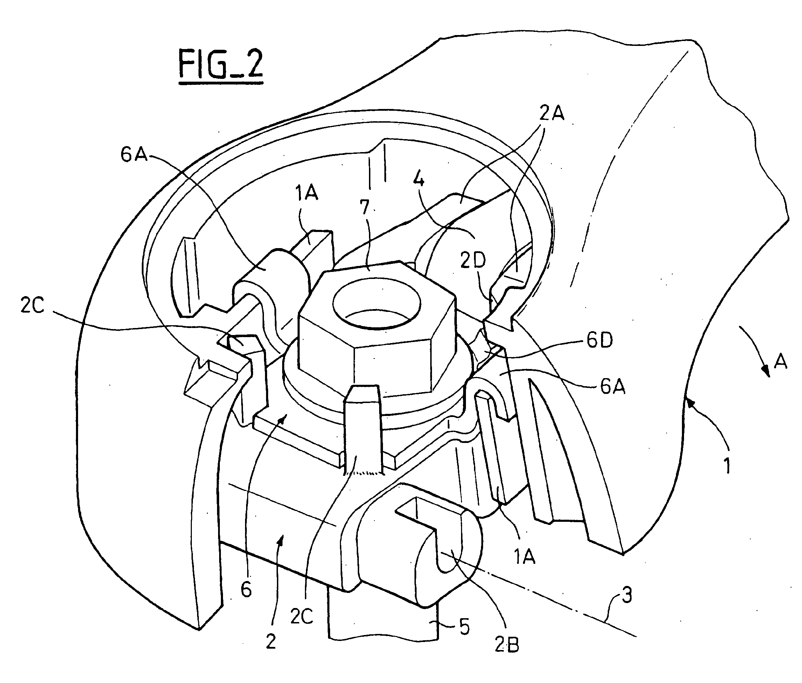

Les figures 1 et 2 sont des vues partielles d'un dispositif d'essuie -glace représentant la zone d'articulation du bras 1 sur l'entraîneur 2, une partie du bras n'étant pas représentée pour une meilleure visibilité. De préférence, bras 1 et entraîneur 2 sont en matière plastique. L'entraîneur 2 est actionné en rotation sur une plage angulaire par l'intermédiaire d'un arbre 5. Cette rotation assure le balayage du bras et de son balai sur la vitre. Le bras 1 est articulé en pivotement autour d'un premier axe 3 sensiblement perpendiculaire à l'axe de l'arbre 5, grâce à deux tenons non visibles encastrés dans deux supports 2B de l'entraîneur 2. Le premier axe 3 est disposé dans l'entraîneur du côté opposé au bras par rapport à l'arbre 5.

Cette possibilité de pivotement permet d'appliquer le bras 1 et son balai associé sur la vitre selon un pivotement selon la flèche A sous l'action d'un ressort logé dans le bras, articulé à ce dernier et articulé à son autre extrémité 4 sur deux branches 2A de l'entraîneur. Cette possibilité de pivotement permet également le décollement le bras et son balai de la vitre par pivotement dans le sens inverse de la flèche A à l'encontre de l'effort du ressort. C'est ce décollement que l'invention se propose de limiter afin d'éviter tout décrochage préjudiciable.

Les moyens de limitation de ce pivotement dans le sens opposé à la vitre dit décollement sont constitués d'une partie de bras et d'une partie d'entraîneur venant en butée lorsque le bras est pivoté d'un angle déterminé.

Ladite partie d'entraîneur est une rondelle 6 montée sur l'arbre 5 est solidarisée avec l'entraîneur par intercalage entre l'entraîneur 2 et un écrou de fixation 7 vissé à l'extrémité de l'arbre 5.

Elle est pourvue d'un moyen de butée de ladite partie de bras constitué de deux branches 6A saillantes sur la périphérie de la rondelle 6.

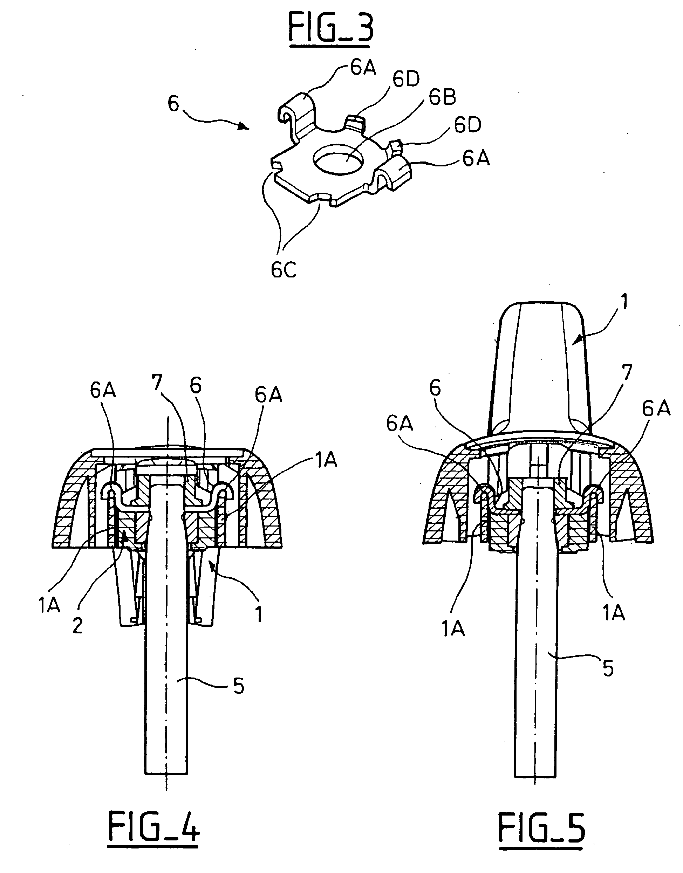

La rondelle 6 est représentée seule en perspective sur la figure 3. Elle est de préférence métallique et comporte un alésage central 6B destiné à recevoir l'extrémité de l'arbre 5. La rondelle 6 comporte également deux encoches 6C et deux rebords 6D destinés à coopérer avec des moyens de détrompage porté par l'entraîneur 2 pour un positionnement correct de la rondelle. Ces moyens de détrompage consistent, comme visible sur les figures 1 et 2, en deux tenons 2C et en une paroi 2D de l'entraîneur contre lesquels sont glissés les encoches 6C et les rebords 6D de la rondelle 6 lors du montage de la rondelle 6.

Comme particulièrement visible sur les figures 4 et 5, les branches saillantes 6A sont constituées chacune d'un profilé en U dont l'ouverture est dirigée vers la vitre à essuyer et le bras 1 comporte deux lames 1A moulées avec lui et disposées de part et d'autre de l'entraîneur 2 et reçues dans les branches 6A une fois le bras monté. Comme visible sur la figure 5, en position maximale autorisée de décollement, ces lames 1A viennent en butée au fond de l'ouverture en U de ces branches 6A de la rondelle 6.

Par conception de la rondelle 6 et des dimensions de ses branches saillantes 6A, l'angle de décollement maximal peut être choisi et réglé.

## Revendications

1. Dispositif d'essuie-glace comportant un bras (1) articulé en pivotement autour d'un premier axe (3) sur un entraîneur (2) actionné en rotation sur une plage angulaire par l'intermédiaire d'un arbre (5) d'axe sensiblement perpendiculaire au premier axe (3), comportant des moyens de limitation dudit pivotement dans le sens opposé à une surface à essuyer, constitués d'une partie de bras et d'une partie d'entraîneur venant en butée lorsque le bras (1) est pivoté d'un angle déterminé, **caractérisé en ce que** ladite partie d'entraîneur est une rondelle (6) montée sur ledit arbre (5), solidarisée avec l'entraîneur (2) et pourvue d'un moyen de butée de la dite partie de bras.

2. Dispositif d'essuie-glace selon la revendication 1, **caractérisé en ce que** ledit moyen de butée est constitué d'au moins une branche saillante (6A) sur la périphérie de ladite rondelle (6) et ladite partie de bras est constituée d'une lame (1A) solidaire du bras.

3. Dispositif d'essuie-glace selon la revendication 2, **caractérisé en ce que** ladite branche saillante (6A) est constituée d'un profilé en U dont l'ouverture est dirigée vers ladit surface et reçoit ladite lame (1A) lorsque le bras est pivoté d'un angle déterminé.

4. Dispositif d'essuie-glace selon l'une des revendications précédentes, **caractérisé en ce que** ladite rondelle (6) est intercalée entre l'entraîneur (2) et un écrou de fixation (7) de ce dernier sur ledit arbre.

5. Dispositif d'essuie-glace selon l'une des revendications précédentes, **caractérisé en ce que** ledit premier axe (3) est disposé dans l'entraîneur (2) du côté opposé au bras (1) par rapport au dit arbre (5).

6. Dispositif d'essuie-glace selon l'une des revendications précédentes, **caractérisé en ce que** l'entraîneur (2) comporte des moyens de détrompage (2C, 2D) pour un positionnement correct de ladite rondelle (6).

7. Dispositif d'essuie-glace selon l'une des revendications précédentes, **caractérisé en ce que** ladite rondelle (6) est métallique.

## Claims

1. Windscreen wiper device comprising an arm (1) articulated such as to pivot about a first axis (3) on a driver (2) activated to rotate through a range of angles by means of a shaft (5) with an axis that is substantially perpendicular to the first axis (3), comprising means for limiting said pivoting in the opposite direction to a surface to be wiped, consisting of a part of an arm and of a part of a driver that comes to a stop when the arm (1) is pivoted by a given angle, **characterised in that** said driver part is a washer (6) mounted on said shaft (5), solidly attached to the driver (2) and equipped with means for stopping said arm part.

2. Windscreen wiper device according to claim 1, **characterised in that** said stopping means consist of at least one projecting branch (6A) on the periphery of said washer (6) and said arm part consists of a blade (1A) solidly attached to the arm.

3. Windscreen wiper device according to claim 2, **characterised in that** said projecting branch (6A) consists of a U-shaped profile, the open end of which is pointing towards the surface and receives said blade (1A) when the arm is pivoted by a given angle.

4. Windscreen wiper device according to one of the preceding claims, **characterised in that** said washer (6) is placed between the driver (2) and a nut (7) for fastening the latter to said shaft.

5. Windscreen wiper device according to one of the preceding claims, **characterised in that** said first axis (3) is placed in the driver (2) on the side opposite the arm (1) in relation to said shaft (5).

6. Windscreen wiper device according to one of the preceding claims, **characterised in that** the driver (2) comprises foolproofing means (2C, 2D) to ensure the correct positioning of said washer (6).

7. Windscreen wiper device according to one of the preceding claims, **characterised in that** said washer (6) is metallic.

## Patentansprüche

1. Scheibenwischervorrichtung mit einem Gelenkarm (1), der um eine erste Achse (3) auf einem Mitnehmer (2) schwenkt, der auf einer Winkelebene vermittels einer Achswelle (5) in Drehung versetzt wird, die deutlich senkrecht zur ersten Achse (3) steht, sie umfaßt Mittel zur Begrenzung der besagten Schwenkung in entgegengesetzter Richtung zu einer zu wischenden Fläche, die aus einem Armteil und einem Mitnehmerteil bestehen, die anschlagen, wenn der Arm (1) um einen bestimmten Winkel geschwenkt wird, **dadurch gekennzeichnet, daß** der besagte Mitnehmerteil eine auf die besagte Welle (5) montierte Scheibe (6) ist, die mit dem Mitnehmer (2) fest verbunden und mit einem Anschlagmittel des besagten Armteils versehen ist.

2. Scheibenwischervorrichtung nach Anspruch 1, **dadurch gekennzeichnet, daß** das besagte Anschlagmittel aus mindestens einem hervorstehenden Zweig (6A) auf der Peripherie der besagten Scheibe (6) gebildet wird, und der besagte Armteil aus einem Blättchen (1A) besteht, das fest mit dem Arm verbunden ist.

3. Scheibenwischervorrichtung nach Anspruch 2, **dadurch gekennzeichnet, daß** der besagte vorstehende Ast (6A) aus einem U-Profil besteht, dessen Öffnung zur besagten Fläche gerichtet ist und das besagte Blättchen (1A) aufnimmt; wenn der Arm um einen bestimmten Winkel geschwenkt wird.

4. Scheibenwischervorrichtung nach einem der vorstehenden Ansprüche, **dadurch gekennzeichnet, daß** die besagte Scheibe (6) zwischen dem Mitnehmer (2) und einer Befestigungsmutter (7) des letzteren auf der besagten Welle sitzt.

5. Scheibenwischervorrichtung nach einem der vorstehenden Ansprüche, **dadurch gekennzeichnet, daß** die besagte erste Achse (3) im Mitnehmer (2) auf der entgegengesetzten Seite zum Arm (1) gegenüber der besagten Welle (5) angeordnet ist.

6. Scheibenwischervorrichtung nach einem der vorstehenden Ansprüche, **dadurch gekennzeichnet, daß** der Mitnehmer (2) Unverwechselbarkeitsmittel (2C, 2D) für die richtige Positionierung der besagten Scheibe (6) umfaßt.

7. Scheibenwischervorrichtung nach einem der vorstehenden Ansprüche, **dadurch gekennzeichnet, daß** die besagte Scheibe (6) aus Metall ist.
